# FASCICULE DE BREVET EUROPEEN

(11) **EP 0 778 971 B1**
(45) Date de publication et mention de la délivrance du brevet: **02.06.1999**
(21) Numéro de dépôt: 95929917.3
(22) Date de dépôt: 31.08.1995
(51) Int. Cl.: G07F 17/32, G07F 7/08

(54) **LECTEUR DE CARTE POUR MACHINE DE JEUX**
KARTENLESER FÜR SPIELAUTOMAT
CARD READER FOR GAME MACHINE

(30) Priorité: 31.08.1994 FR 9410501
(43) Date de publication de la demande: 18.06.1997
(73) Titulaire: GEMPLUS, 13420 Gemenos (FR)
(72) Inventeur: BONIFAS, Corinne, F-13420 Gemenos (FR); FOGLINO, Jean-Jacques, F-13790 Peynier (FR); NICOLAI, Alain, F-13190 Allauch (FR)
(74) Mandataire: Schmit, Christian Norbert Marie
(86) Numéro de dépôt international: FR9501137
(87) Numéro de publication internationale: WO9607164

(56) Documents cités:
- EP-A- 0 513 847
- WO-A-94/16416
- DE-U- 9 201 899
- FR-A- 2 691 561
- GB-A- 2 018 484
- US-A- 3 850 299

## Description

L'invention concerne un lecteur de carte pour machine de jeux et notamment un lecteur de carte à puces permettant de tester le contenu de la carte en vue de permettre à l'utilisateur de l'utiliser dans la machine de jeux ou de la récupérer lorsqu'il désire arrêter de jouer.

Dans les casinos et en règle générale dans les salles de jeux, on utilise des machines de jeux fonctionnant avec des pièces de monnaie ou avec des jetons que l'utilisateur achète à la caisse.

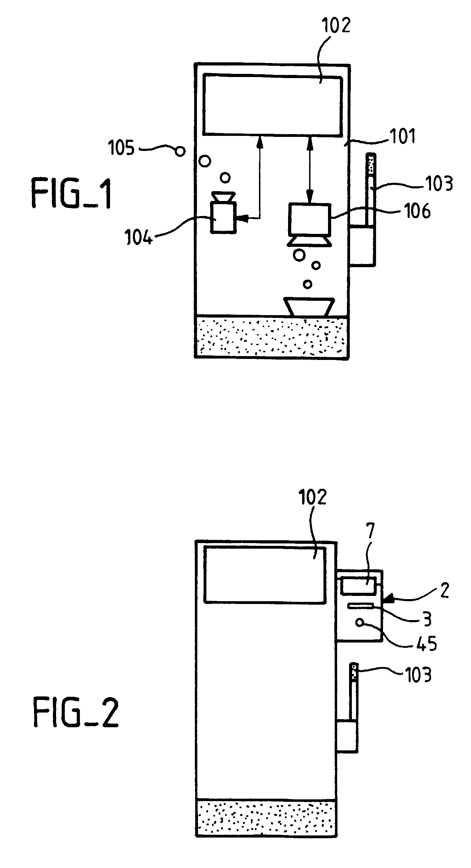

Une machine de jeux courante se présente comme celle de la figure 1. Elle comporte un corps ou carrosserie 101 muni d'une fenêtre 102 ou d'un écran d'affichage permettant de présenter à l'utilisateur les paramètres du jeu. La machine peut comporter un bras 103 ou un bouton de commande non représenté permettant de lancer la partie. Par exemple, cette commande permet de faire défiler des symboles sur l'écran. La partie est gagnée si les symboles forment une combinaison gagnante et, elle est perdue dans le cas inverse.

Pour pouvoir lancer la partie, le joueur doit mettre dans un monnayeur 104 un ou plusieurs jetons 105. Lorsque la partie est gagnée, une trémie 106 libère un certain nombre de jetons, correspondant selon les règles du jeu par exemple à n fois la mise.

Les jetons sont actuellement le plus souvent des jetons métalliques qui peuvent être de couleurs et de diamètres différents correspondant à des valeurs faciales différentes. Ils peuvent également être en matériaux de natures différentes. Pour que le monnayeur 104 puisse les distinguer entre eux, il faut alors utiliser la signature magnétique donnée par les matériaux de natures différentes et/ou les dimensions différentes. On utilise encore parfois la pratique ancienne consistant à utiliser des pièces de monnaie à la place de jetons.

Outre les éventuelles tentatives de fraudes, l'usage de jetons n'est pas pratique. Il nécessite la présence d'un personnel relativement important dans une caisse centrale, et des opérations de comptabilité sources d'erreurs, voire de fraudes. En outre, l'usage des jetons ralentit l'utilisation de la machine et limite le montant des mises possibles.

On voit se substituer à l'usage des jetons un système plus moderne, sans toutefois renoncer complètement à cet usage pour ne pas bouleverser les habitudes des joueurs et préserver certains aspects conviviaux de la machine.

Pour cela on utilise des systèmes à cartes telles que des cartes à puces.

La demande de brevet WO-A-94/16416 utilise de telles cartes à puce pour la protection des mineurs. Ces cartes comportent en effet des indications sur l'identification du joueur et sur un montant maximum pouvant être joué ou sur la durée maximale du jeu. Lorsque le maximum autorisé est atteint, la carte d'autorisation n'est pas restituée au joueur.

La demande de brevet FR-A-2 691 561 se rapporte quant à elle à un système utilisant une carte à puce pour jouer, dans laquelle la machine de jeux inscrit les opérations de débit ou de crédit et le solde restant après chaque partie. La machine de jeux doit donc posséder un lecteur de carte qui puisse lire le contenu de la carte, c'est à dire la somme d'argent disponible mise en mémoire dans la carte, qui puisse traiter les transactions faites par la machine de jeux à la demande de l'utilisateur et qui puisse , après transaction, inscrire dans la carte la somme d'argent nouvellement disponible.

Cependant, ces cartes présentent un certain coût et lorsque le montant d'argent inscrit dans la carte a été épuisé et que la carte n'est plus utilisable en l'état, le propriétaire des machines de jeux peut avoir intérêt à les récupérer pour les réutiliser.

L'invention concerne donc un lecteur de carte à puce pour machine de jeux, apte à débiter ou à créditer le contenu monétaire enregistré sur une carte à puce
- la figure 1, une machine de jeu selon l'art connu et déjà décrite précédemment;
- la figure 2, une machine de jeu selon l'invention;
- la figure 3, un exemple de circuit du lecteur de carte selon l'invention;
- la figure 4, des circuits du lecteur plus spécifiques à l'invention,
- la figure 5, une organisation de circuits plus spécifiques permettant de mettre en oeuvre l'invention.

La machine de jeux selon l'invention représentée sur la figure 2 est essentiellement identique dans son aspect et dans son fonctionnement à la machine classique représentée en figure 1. En effet, il est très important de ne pas perturber les habitudes du joueur.

Sur la figure 2, on n'a pas représenté les moyens permettant de faire fonctionner la machine de jeux avec des jetons, mais ces moyens pourraient exister et coexister pour fonctionner avec le lecteur de cartes selon l'invention.

Le lecteur de carte 2 qui permet de faire fonctionner la machine à partir d'une carte "à puce" est fixé de préférence sur le flanc droit de la machine à une hauteur convenable pour pouvoir introduire aisément une carte à puce dans la fente d'entrée 3 du lecteur 2 et pour pouvoir lire les indications d'un dispositif de visualisation 7 dont est muni ce lecteur, lequel permet d'indiquer différentes données, notamment le solde. Le lecteur possède également un moyen, tel qu'un bouton 45, pour commander la restitution de la carte. Le lecteur 2 peut également être intégré à la machine.

Les cartes dites "à puce" sont bien connues actuellement dans l'état de la technique. Il existe deux grandes familles, à savoir les cartes à selon les mises et les gains réalisés par un joueur, le lecteur comprenant pour cela une unité centrale de traitement, une mémoire de programme associée et au moins une mémoire réinscriptible électriquement, caractérisé en ce qu'il comporte en outre :
- des moyens de comparaison du montant monétaire disponible à la fin d'une partie, à celle d'une valeur monétaire minimale donnée , délivrant un signal de refus lorsque ce montant disponible est inférieur ou égal à la valeur minimale,
- des moyens d'avalement de la carte pilotés par ce signal de refus.

De plus, l'invention prévoit de réduire le nombre d'accès à la mémoire de la carte à puce pour limiter son usure.

Selon l'invention, on prévoit donc que :
- après l'insertion d'une carte dans le lecteur, la valeur monétaire enregistrée dans la carte est transférée dans la mémoire réinscriptible;
- l'unité centrale de commande met à jour le contenu de la mémoire réinscriptible, à chaque partie, en fonction des mises et gains réalisés;
- en fin de jeu, le dispositif de restitution de carte commande le transfert à la carte du contenu de la mémoire réinscriptible mis à jour, puis dans le cas où le montant disponible est supérieur à la valeur minimale, la restitution de la carte au joueur.

D'autres particularités et avantages de l'invention apparaîtront clairement dans la description suivante faite à titre d'exemple non limitatif en regard des figures annexées qui représentent :
prépaiement utilisées par exemple dans les cabines téléphoniques et les cartes bancaires.

La carte à puce utilisée dans la machine de jeux selon l'invention aura de préférence une présentation extérieure et électrique identique à celles actuellement normalisées, telles que les cartes à prépaiement ou rechargeables que l'on trouve sur le marché et qui en particulier vont permettre de pouvoir cumuler les gains provenant des parties gagnées. On pourra toutefois prévoir d'utiliser tout type de carte convenable, en particulier les cartes actuellement étudiées pour jouer le rôle de porte-monnaie électronique, lesquelles sont particulièrement prévues pour pouvoir être réapprovisionnées dans un lecteur adéquat.

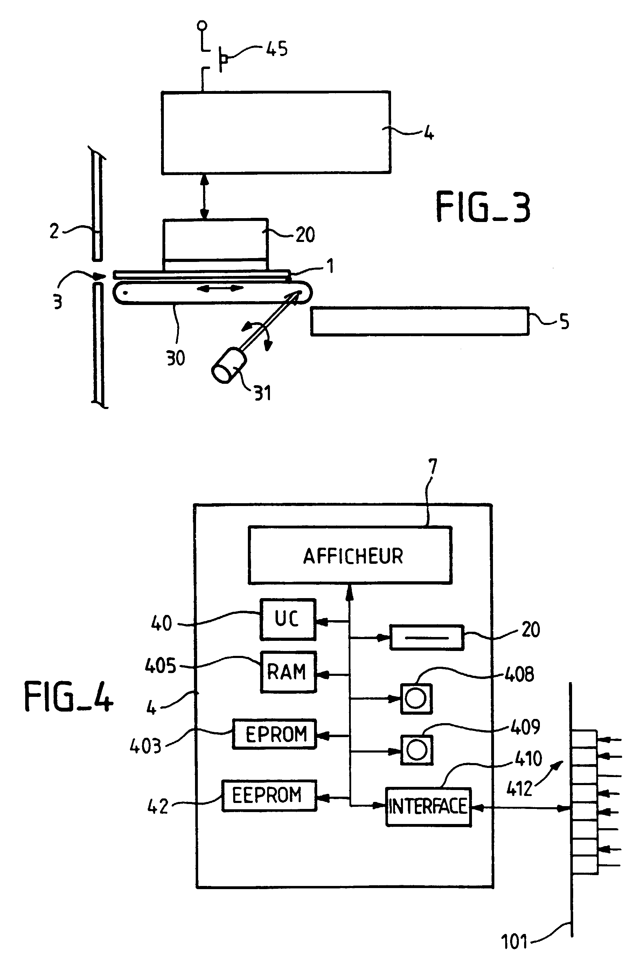

La figure 3 représente de façon schématique le système d'introduction d'une carte dans le lecteur et de son extraction.

Le lecteur 2 possède en face avant la fente d'entrée 3, derrière laquelle se trouve un système de préhension de carte tel qu'un petit tapis roulant 30 ou un système à rouleaux qui par friction ou pincement prend en charge une carte 1 qui est introduite par la fente 3. Un système de commande 31 tel qu'un moteur commande le mouvement du dispositif 30 pour qu'il mette la carte en position devant une interface de lecture/écriture 20. Un tel système est connu dans la technique.

La carte étant en position devant l'interface de lecture/écriture 20, celle-ci lit le contenu d'une mémoire que possède la carte et le transmet au circuit 4 du lecteur. Le contenu correspond à une somme d'argent que l'utilisateur va avoir la possibilité de mettre en jeu dans la machine de jeux.

Le système de la figure 3 possède également un bouton 45 commandable par l'utilisateur et permettant d'émettre un signal au circuit 4 pour que celui-ci commande au dispositif 31 et au dispositif de préhension 30 de ressortir la carte 1 par la fente 3 en vue de la restituer au joueur.

A l'extrémité droite du dispositif de préhension 30 se trouve un bac 5 permettant de recevoir des cartes dans des conditions de fonctionnement qui seront expliquées ultérieurement.

La figure 4 représente les circuits 4 du lecteur. Les circuits sont très similaires à ceux des lecteurs de cartes à puces tels que les distributeurs bancaires par exemple.

Ils comprennent essentiellement une unité centrale de traitement tel qu'un microcontrôleur 40 qui gère l'ensemble des opérations. Ce microcontrôleur est réuni par un bus à une mémoire de programme 403, du type EPROM par exemple, à une deuxième mémoire 42, du type EEPROM par exemple, qui permet de mémoriser un certain nombre de paramètres qui sont amenés à évoluer tels que le montant d'argent mis en jeu, et à une troisième mémoire 405 du type RAM servant de mémoire vive pour l'exécution du programme du microcontrôleur.

La mémoire destinée à enregistrer le montant de la somme d'argent mise en jeu évolue constamment tout au long des parties de jeux exécutées par l'utilisateur et cette mémoire 42 pourrait être d'un autre type que EEPROM.

Le microcontrôleur peut éventuellement être relié à un circuit RTC (Real Time Clock) horloge temps réel et à un module de sécurité qui comprend un algorithme de diversification DES ou RSA.

Le bus est également relié à l'afficheur 7 qui permet d'afficher en particulier les sommes jouées, les gains obtenus et les sommes restantes. Il est relié à l'interface de lecture/écriture 20 destinée à transférer les informations de/vers la carte 1 du joueur, et éventuellement de/vers des cartes destinées au personnel pour intervenir par exemple sur les paramètres du système de paiement (notamment la valeur associée aux boutons minimum et maximum). Enfin, le bus est relié à un certain nombre de boutons de commande, ici deux boutons 408 et 409. Ces boutons dans cet exemple de réalisation servent aux joueurs pour miser, le premier correspondant par exemple à la mise minimale et le deuxième à la mise maximale. On trouve enfin dans le lecteur un certain nombre d'interfaces destinées à le connecter avec l'extérieur. Dans cet exemple de réalisation on a une interface 410 destinée à le relier à la machine de jeux.

L'interface 410 permet de décoder les instructions apparaissant sur le bus et destinées à la machine de jeux. L'interface physique destinée à être connectée à la machine de jeux se présente sous la forme d'un connecteur 412 comportant un ensemble de broches permettant d'émettre et de recevoir les signaux vers/de de la machine de jeux.

Les signaux apparaissant sur ce connecteur 412 seront déterminés par des instructions circulant sur le bus du lecteur et décodées par l'interface 410. Ces instructions seront elles-mêmes déterminées par le programme de fonctionnement implanté dans la mémoire 403. Le programme et l'interface comprenant le connecteur 412 sont adaptés au types de machines utilisées. Dans l'exemple de réalisation décrit la machine répond aux spécifications des machines existant actuellement sur le marché.

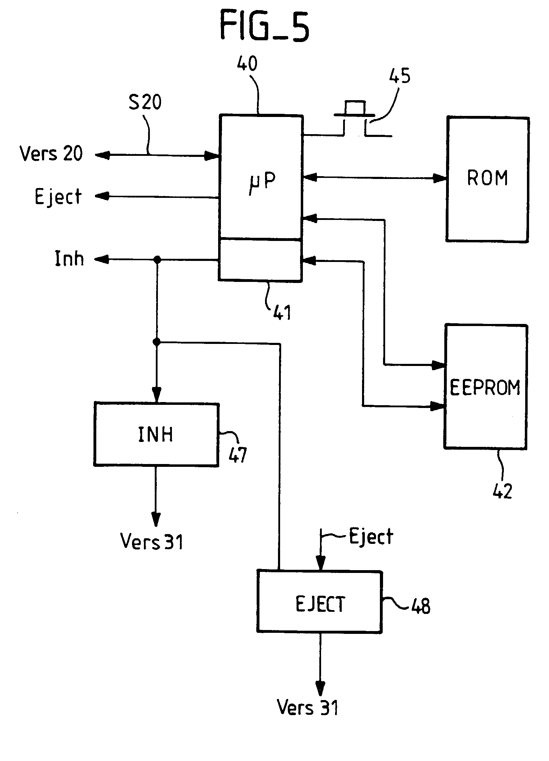

La figure 5 représente une organisation de circuits plus spécifiques permettant de mettre en oeuvre l'invention.

Le microcontrôleur 40 ou microprocesseur µP possède des accès S20 reliés au dispositif de lecture/écriture 20. Il reçoit par ces accès la valeur du montant disponible dans la carte. Il communique cette valeur à la mémoire 42.

A chaque transaction la mémoire 42 voit cette valeur modifiée par le microcontrôleur 40.

Par ailleurs, la mémoire 42 est prévue pour contenir une valeur minimale (0 par exemple) au-dessous de laquelle l'utilisateur ne peut plus utiliser sa carte et au-dessous de laquelle il doit lui être interdit de continuer à jouer. A chaque transaction, la valeur modifiée du montant disponible est comparée à cette valeur minimale dans un comparateur 41 qui peut être un circuit en logique câblée du microcontrôleur 40 ou un programme contenu dans la mémoire ROM et exécuté par le microcontrôleur. Si le montant disponible est inférieur à la valeur minimale, le circuit 41 émet un signal de refus et commande un circuit de commande de confiscation 47 lequel commande le dispositif de préhension de carte pour aiguiller celle-ci vers une zone de confiscation 5 (voir figure 3). Selon le mode d'exploitation du lecteur, cette confiscation peut être également décidée lorsque le montant disponible est égal à la valeur minimale.

Le circuit 41 inhibe également un circuit de restitution EJECT 48 commandé par le bouton 45 et dont le rôle est de commander normalement la restitution par le dispositif 30 de la carte à l'utilisateur.

Lorsqu'un joueur désire utiliser le lecteur 2, il introduit sa carte 1 dans le fente 3 du lecteur 2. Cette introduction lance le fonctionnement de lecteur. Le contenu de la carte 1 est alors transféré à la mémoire 42. Ce contenu est contrôlé afin de valider son existence et son montant. Cette validation permettra par exemple d'éliminer les cartes contrefaites ou appartenant à des personnes qui sont inscrites sur une liste noire d'interdiction de jeu. Elle se fera à l'aide de procédés de reconnaissance de sécurité bien connus dans l'art.

Ces contrôles étant effectués et reconnus valables, le microprocesseur 40 affiche alors sur l'afficheur 7 le montant du crédit contenu dans la carte. Le joueur choisira le montant de la mise qu'il désire mettre en jeu en appuyant sur l'un des deux boutons 408 ou 409. Pour des mises intermédiaires entre la mise minimale et la mise maximale, le joueur pourra appuyer plusieurs fois sur le bouton 408 jusqu'à arriver à la mise maximale. Certaines machines interdisent des mises maximales au moyen d'un signal d'inhibition envoyé par la machine. Cette action sera reprise sur l'afficheur de diverses manières, par exemple affichage de la mise ou du contenu décrémenté du crédit de la carte, ou des deux successivement ou simultanément.

Le joueur fera alors fonctionner la machine de jeux de la manière ordinaire, par exemple en actionnant le levier 103.

Selon le résultat de la partie, le lecteur reçoit de la machine de jeux un gain ou une perte. Le microprocesseur 40 met à jour la mémoire 42 en actualisant le montant restant au crédit du joueur.

La valeur du montant disponible est transférée au circuit de comparaison 41 ainsi que la valeur minimale pouvant être disponible. Si le montant disponible est supérieur à la valeur minimale, le gain/la perte obtenu et/ou le montant du nouveau crédit est affiché sur l'afficheur 406, et le joueur peut derechef jouer à nouveau, sans avoir à récupérer des jetons qui seraient redistribués si la machine fonctionnait avec des jetons.

On remarque que l'on peut éviter une perte de temps par rapport à la situation où il faut rechercher des jetons et les remettre dans la machine. On améliore ainsi grandement la rentabilité de la machine.

Si le montant disponible est inférieur à la valeur minimale, le circuit de comparaison 41 émet un signal d'inhibition Inh vers la machine de jeux. De plus, ce signal est transmis au circuit de commande 47 qui agit sur le dispositif de commande 31 pour aiguiller la carte vers le réceptacle 5 interne au lecteur.

Eventuellement, avant cette commande, le microprocesseur 40 peut communiquer à l'interface de lecture/écriture 20 le montant nouvellement actualisé pour qu'il l'inscrive dans la mémoire de la carte 1.

Lorsque l'utilisateur désire cesser de jouer, il manoeuvre le bouton 45. Celui-ci applique un signal au microprocesseur 40. Le microprocesseur transfère la valeur du montant disponible contenu dans la mémoire 42 vers l'interface de lecture/écriture 20 par la liaison S20. Celui-ci inscrit ce nouveau montant dans la mémoire de la carte 1. De plus, le microprocesseur émet un signal Eject qui est transmis au dispositif de commande de restitution de carte EJECT 48. Ce dispositif commande les moyens de commande 31 pour que le dispositif 30 restitue la carte par la fente 3 du lecteur.

Il est à noter que lors de ce fonctionnement déclenché par la manoeuvre du bouton 45, le montant disponible dans la mémoire 42 peut être communiqué au circuit de comparaison 41 et être comparé à la valeur minimale. Si le montant disponible est inférieur à la valeur minimale et même, selon le type d'exploitation de la carte, s'il y a égalité, un signal de refus Inh peut être émis pour interdire le fonctionnement du circuit EJECT 48 et pour commander le fonctionnement du dispositif 47 en vue de conserver la carte dans le lecteur.

Dans ce qui précède, le montant minimal peut être une valeur nulle ou la valeur de consigne de la carte.

Les différentes transactions utilisées par les cartes des joueurs, ainsi qu'un certain nombre d'informations concernant le jeu, entre autres les montants distribués à la suite de gain comme expliqué plus haut, sont mémorisés dans la mémoire 42 du lecteur à carte. Ceci permet à différents moments, par exemple en fin de journée, de venir recueillir ces informations dans des buts de contrôles et de statistiques. Pour cela on pourra par exemple utiliser une interface supplémentaire par exemple une ligne série RS232 ou un système infra-rouge muni d'un connecteur adéquat placé sur le lecteur. Une autre solution consiste à utiliser une carte dénommée MaxiCard (marque déposée par la Demanderesse) au gestionnaire de la machine de jeux. Cette carte est introduite dans le lecteur qui la reconnait et qui met en oeuvre le programme de chargement dans la carte des données recueillies dans les mémoires du lecteur monnayeur.

## Revendications

1. Lecteur de carte à puce pour machine de jeux, apte à débiter ou à créditer le contenu monétaire enregistré sur une carte à puce selon les mises et les gains réalisés par un joueur, le lecteur comprenant pour cela une unité centrale de traitement (40) une mémoire de programme (405) associée et au moins une mémoire réinscriptible électriquement (42), caractérisé en ce qu'il comporte en outre :
- des moyens de comparaison (41) du montant monétaire disponible à la fin d'une partie, à celle d'une valeur monétaire minimale donnée, délivrant un signal de refus lorsque ce montant disponible est inférieur ou égal à la valeur minimale;
- des moyens d'avalement (5,47) de la carte pilotés par ce signal de refus.

2. Lecteur de carte selon la revendication 1, caractérisé en ce que les moyens de comparaison sont réalisés par un programme enregistré en mémoire programme.

3. Lecteur de carte selon la revendication 1, caractérisé en ce que les moyens de comparaison sont réalisés en logique câblée.

4. Lecteur de carte selon la revendication 1, caractérisé en ce qu'il comporte un dispositif de restitution de carte (45, 48) pour restituer celle-ci au joueur, le signal de refus inhibant le fonctionnement de ce dispositif de restitution.

5. Lecteur de carte selon la revendication 4, caractérisé en ce que :
- après l'insertion d'une carte (1) dans le lecteur, la valeur monétaire enregistrée dans la carte est transférée dans la mémoire réinscriptible (43);
- l'unité centrale de commande (40) met à jour le contenu de la mémoire réinscriptible, à chaque partie, en fonction des mises et gains réalisés;
- en fin de jeu, le dispositif de restitution de carte (45, 48) commande le transfert, à la carte, du contenu de la mémoire réinscriptible mise à jour, puis la restitution de la carte au joueur.

6. Lecteur de carte selon l'une des revendications 1 ou 4, caractérisé en ce qu'il comporte un dispositif de préhension de carte permettant, lors de l'insertion de la carte dans le lecteur, de la présenter à l'interface de lecture/écriture (20); le signal de refus émis par les moyens de comparaison commande le dispositif de préhension de carte (30, 31) pour aiguiller la carte vers les moyens d'avalement; le dispositif de restitution (45, 48) commande le dispositif de préhension (30, 31) pour restituer la carte au joueur.

7. Lecteur de carte selon la revendication 1, caractérisé en ce que la valeur monétaire minimale est contenue dans une mémoire associée à l'unité centrale de commande.

## Patentansprüche

1. Lesegerät für Chipkarte für eine Spielmaschine zum Belasten oder Gutschreiben des auf der Chipkarte registrierten monitären Werts gemäß dem von einem Spieler erbrachten Einsätzen und realisierten Gewinnen, derart, daß das Lesegerät hierfür eine zentrale Verarbeitungseinheit (40) enthält, sowie einen zugeordneten Programmspeicher (405) und mindestens einen elektrisch überschreibbaren Speicher (42), dadurch gekennzeichnet, daß es zudem enthält:
eine Vergleichseinrichtung (41) zum Anzeigen des am Ende einer Partie verfügbaren Geldwerts mit einem vorgegebenen minimalen Geldwert und zum Abgeben eines Sperrsignals, wenn der verfügbare Anzeigewert kleiner oder gleich dem Minimalwert ist;
eine Vorrichtung (5, 47) zum Schlucken der durch dieses Sperrsignal bezeichneten Karte.

2. Lesegerät für eine Karte nach Anspruch 1, dadurch gekennzeichnet, daß die Vergleichsvorrichtung durch ein in dem Programmspeicher gespeichertes Programm realisiert ist.

3. Lesegerät für eine Karte nach Anspruch 1, dadurch gekennzeichnet, daß die Vergleichsvorrichtung durch fest verdrahtete Logik realisiert ist.

4. Lesegerät für eine Karte nach Anspruch 1, dadurch gekennzeichnet, daß sie eine Karten-Ausgabevorrichtung (45, 46) zum Rückgeben derselben an den Spieler enthält und daß das Sperrsignal die Funktionsweise dieser Ausgabevorrichtung sperrt.

5. Lesegerät für eine Karte nach Anspruch 4, dadurch gekennzeichnet, daß
nach dem Einfügen einer Karte (1) in das Lesegerät der in der Karte registrierte Geldwert in den überschreibbaren Speicher (43) übertragen wird;
die zentrale Befehlseinheit (40) den Inhalt des überschreibbaren Speichers bei jeder Partie als Funktion der erbrachten Einsätze und realisierten Gewinne anzeigt; und
am Spielende die Karten-Ausgabevorrichtung (45, 48) die Übertragung des angezeigten Inhalts des überschreibbaren Speichers zu der Karte und anschließend die Ausgabe der Karte an den Spielen anweist.

6. Lesegerät für eine Karte nach einem der Ansprüche 1 bis 4, dadurch gekennzeichnet, daß sie eine Greifvorrichtung enthält, die beim Einführen der Karte in das Lesegerät einen Eingriff mit der Schnittstelle des Lesegeräts/Schreibgeräts (20) ermöglicht, und daß das von der Vergleichsvorrichtung abgegebene Sperrsignal die Karten-Schreibvorrichtung (30, 31) zum Weiterleiten der Karte zu der Schluckvorrichtung anweist; und ferner die Ausgabevorrichtung (45, 48) die Schreibvorrichtung (30, 31) zum Ausgeben der Karte an den Spieler anweist.

7. Lesegerät für eine Karte nach Anspruch 1, dadurch gekennzeichnet, daß der minimale Geldwert in einem der zentralen Befehlseinheit zugeordneten Speicher enthalten ist.

## Claims

1. A chip card reader for a gaming machine designed to debit or credit the cash balance recorded on a chip card to account for the bets and winnings of a player, the reader having for this purpose a central processing unit (40) linked to a programme memory (405) and at least one electrically re-writable memory (42), characterised in that it also has:
- means for comparing (41) the cash amount available at the end of a game with that of a given minimum cash value, a rejection signal being issued if the amount available is less than or equal to the minimum value;
- means for swallowing (5, 47) the card controlled by this rejection signal.

2. A card reader as claimed in claim 1, characterised in that the comparing means consist of a programme recorded in a programme memory.

3. A card reader as claimed in claim 1, characterised in that the comparing means are set up as a cabled logic.

4. A card reader as claimed in claim 1, characterised in that it has a card-eject device (45, 48) for return the card to the player, the rejection signal inhibiting the operation of this eject device.

5. A card reader as claimed in claim 4, characterised in that:
- when a card (1) is inserted in the reader, the cash value recorded on the card is transferred to the re-writable memory (43);
- the central control unit (40) updates the contents of the re-writable memory, with each game, to record the stakes and winnings made;
- at the end of the game, the card-eject device (45, 48) issues a command to transfer the updated contents of the re-writable memory to the card and then return the card to the player.

6. A card reader as claimed in any one of claims 1 or 4, characterised in that it has a card-gripping device so that when the card is inserted in the reader it is positioned at the read/write interface (20); the rejection signal issued by the comparing means issues a command to the card-gripping device (30, 31) to switch the card to the swallowing means; the eject device (45, 48) issues a command to the gripping device (30, 31) to return the card to the player.

7. A card reader as claimed in claim 1, characterised in that the minimum cash value is contained in a memory linked to the central control unit.
